# EUROPÄISCHE PATENTSCHRIFT

(11) **EP 3 665 027 B1**
(45) Veröffentlichungstag und Bekanntmachung des Hinweises auf die Patenterteilung: **25.05.2022**
(21) Anmeldenummer: 18756380.4
(22) Anmeldetag: 01.08.2018
(51) Int. Cl.: B60K 35/00, B60K 37/06

(54) **VERFAHREN UND VORRICHTUNG ZUM BETRIEB EINES BERÜHRUNGSEMPFINDLICHEN BILDSCHIRMS EINES FAHRZEUGES**
METHOD AND DEVICE FOR OPERATING A TOUCH-SENSITIVE SCREEN OF A VEHICLE
PROCÉDÉ ET DISPOSITIF PERMETTANT DE FAIRE FONCTIONNER UN ÉCRAN TACTILE D'UN VÉHICULE

(30) Priorität: 09.08.2017 DE 102017213892
(43) Veröffentlichungstag der Anmeldung: 17.06.2020
(73) Patentinhaber: Volkswagen Aktiengesellschaft, 38440 Wolfsburg (DE)
(72) Erfinder: SCHIEMENZ, Richard Ludwig, 38550 Isenbüttel (DE); AUER, Richard, 38442 Wolfsburg (DE)
(86) Internationale Anmeldenummer: PCT/EP2018/070854
(87) Internationale Veröffentlichungsnummer: WO 2019/030075

(56) Entgegenhaltungen:
- EP-A1- 2 741 200
- DE-A1-102013 100 355
- DE-A1-102014 014 412
- DE-A1-102015 003 204

## Beschreibung

Die vorliegende Erfindung betrifft ein Verfahren und eine Vorrichtung zur Bedienung eines berührungsempfindlichen Bildschirms. Insbesondere betrifft die Erfindung eine Vorrichtung bzw. ein Verfahren zum Betrieb eines Fahrzeugs, in dem ein berührungsempfindlicher Bildschirm zu Kommunikationszwecken vorgesehen ist.

Es kann festgestellt werden, dass berührungsempfindliche Bildschirme, auch Touch-Displays genannt, zunehmend zur Kommunikation zwischen dem Bediener eines Fahrzeugs und dem Fahrzeug eingesetzt werden. Offensichtlich ist, dass diese Kommunikationsschnittstelle fehlerfrei arbeiten sollte, damit eine wunschgemäße Bedienung ermöglicht ist.

Weiter ist zu berücksichtigen, dass insbesondere im Lichte der Energieeffizienz und/oder des Abgasverhaltens des Fahrzeuges Energieverbraucher auf deren Wirksamkeit überprüft werden sollen. Insbesondere sollen Bedienkomponenten, wie berührungssensitive Anzeigeelemente, Softbuttons oder dergleichen (hier übergreifend mit berührungsempfindlicher Bildschirm bezeichnet) überwacht werden.

Teilweise können spezielle Funktionen derartiger berührungsempfindlicher Bildschirme anhand von Eigendiagnosen bzw. Routinen überprüft werden. So ist es beispielsweise möglich zu überwachen, ob die Leuchtmittel bei einem berührungsempfindlichen Bildschirm ordnungsgemäß arbeiten.

Wenn auch schon teilweise eine Diagnose der Funktionalität bei berührungsempfindlichen Bildschirmen ermöglicht ist, so finden diese noch nicht für zentrale Kommunikationsschnittstellen Anwendung. Insbesondere besteht daher der Wunsch, Verfahren und Vorrichtungen anzugeben, bei denen die Bedienung eines berührungsempfindlichen Bildschirms umfassender überwacht werden kann. Insbesondere sollen Routinen entwickelt werden, die eine klare, eindeutige Kommunikation zwischen dem Bediener und der Steuerung des Fahrzeugs ermöglichen.

Die Patentschrift EP 2 741 200 A1 offenbart einen berührungsempfindlichen Bildschirm, der zwischen einem inaktiven und einem aktiven Zustand umschaltbar ist. Dabei signalisiert man dem Benutzer den aktuellen Aktivierungszustand des berührungsempfindlichen Bildschirmes durch bspw. ein von der Hintergrundbeleuchtung des Bildschirmes erzeugtes optisches Signal. Allerdings wird dem Benutzer der falsche Zustand signalisiert, wenn die Hintergrundbeleuchtung defekt ist, was zu einer ungewollten Bedienung führen kann. Daher besteht der Wunsch, Verfahren und Vorrichtungen anzugeben, bei denen die Bedienung eines berührungsempfindlichen Bildschirms umfassender überwacht werden kann.

Hiervon ausgehend ist es Aufgabe der vorliegenden Erfindung, die mit Bezug auf den Stand der Technik geschilderten Probleme zu lindern oder zumindest teilweise zu lösen. Insbesondere soll ein Verfahren zur Bedienung eines berührungsempfindlichen Bildschirms und/oder zum Betrieb eines Fahrzeugs angegeben werden, mit dem eine funktionale Kommunikation zwischen Bediener und einer Recheneinheit separat geprüft und bewertet werden kann.

Diese Aufgaben werden gelöst mit den Verfahren und der Vorrichtung gemäß den Merkmalen der unabhängigen Patentansprüche. Vorteilhafte Ausgestaltungen sind in den abhängigen Patentansprüchen angegeben. Es ist darauf hinzuweisen, dass die in den Patentansprüchen aufgeführten Merkmale einzeln miteinander und/oder mit Gegenständen der allgemeinen Beschreibung kombiniert werden können, wobei weitere Ausführungsvarianten der Erfindung aufgezeigt werden.

Hierzu trägt ein Verfahren zur Bedienung eines berührungsempfindlichen Bildschirms mit einer Recheneinheit bei, welches zumindest die folgenden Schritte umfasst:
a. Auswählen eines Abschnittes des berührungssensiblen Bildschirms durch die Recheneinheit;
b. Anzeigen eines Signals in dem ausgewählten zur Motivierung einer erwarteten Berührung;
c. Erfassen einer Berührung in dem ausgewählten Abschnitt über eine vorgebbare Zeitspanne;
   wobei
d. die Berührungsempfindlichkeit des Bildschirms deaktiviert wird, wenn innerhalb der vorgegebenen Zeitspanne keine Berührung in dem ausgewählten Abschnitt erfasst wird.

Der berührungsempfindliche Bildschirm kann als einheitliches Touch-Display ausgeführt sein. Es ist möglich, dass der berührungsempfindliche Bildschirm aus mehreren Touch-Displays und/oder Softbuttons zusammengesetzt ist.

Das Verfahren wird insbesondere dann initiiert, wenn eine (reine) Funktionsüberwachung des berührungsempfindlichen Bildschirms gewünscht wird. Das bedeutet beispielsweise, dass das Verfahren einmalig vor (jeder neuen) Benutzung des berührungsempfindlichen Bildschirms initiiert bzw. durchgeführt wird, z. B. beim Start eines Fahrzeuges.

Gemäß Schritt a. wird ein Abschnitt bzw. werden mehrere Abschnitte des berührungssensiblen Bildschirms ausgewählt und gegebenenfalls markiert. Das bedeutet, dass von einer Recheneinheit ein einzelner Abschnitt bzw. mehrerer Abschnitte des berührungssensiblen Bildschirms ausgewählt werden. Diese Auswahl kann (temporär oder permanent) gespeichert werden.

Gemäß Schritt b. wird in dem mindestens einen ausgewählten Abschnitt ein Signal angezeigt. Das Signal kann dauerhaft und/oder intermittierend angezeigt werden. Das Signal soll insbesondere seitens des Bedieners optisch wahrzunehmen sein. Das Signal kann z. B. nach Art einer Graphik, einem Symbol, einem Text und/oder einem Bild ausgeführt sein. Hinsichtlich der Eingabe bzw. das Anzeigen des Signals ist denkbar, dass neben Ziffern, Buchstaben und Kombinationen daraus auch jegliche Art von Mustern und/oder Bildern verwendet werden. All diese Inhalte haben gemein, dass es sich um eine visuell prägnante Initialbotschaft an den Bediener handelt, welche eine spezifisch erwartete Reaktion auslöst bzw. beschreibt. Mit dem Anzeigen des Signals soll eine Berührung des Bedieners auf den ausgewählten Abschnitt motiviert werden.

Gemäß Schritt c. ist der berührungsempfindliche Bildschirm, insbesondere in dem ausgewählten Abschnitt, berührungsempfindlich und erwartet eine Berührung innerhalb einer vorgegebenen Zeitspanne. Die Zeitspanne kann starr gespeichert und/oder flexibel vorgebbar sein. Es ist möglich, dass während Schritt c. die anderen Abschnitte des berührungssensiblen Bildschirms berührungsempfindlich und/oder nicht-berührungsempfindlich sind.

In Reaktion auf Schritt c. wird folglich entschieden, ob die Berührungsempfindlichkeit des Bildschirms für die weitere Bedienung des berührungsempfindlichen Bildschirms (zeitweise oder dauerhaft) aktiviert oder deaktiviert wird. Schritt d. umfasst, dass die Berührungsempfindlichkeit des Bildschirms deaktiviert wird, wenn innerhalb der vorgegebenen Zeitspanne keine Berührung in dem ausgewählten Abschnitt erfasst wird. Damit ist beispielsweise unterbunden, dass der berührungsempfindliche Bildschirm im andauernden Betrieb z. B. des Fahrzeugs als bidirektionale Kommunikationsschnittstelle zwischen Bediener und Fahrzeug genutzt werden kann. Vielmehr kann der Bildschirm dann als (reines) Anzeigegerät benutzt werden, über das dem Bediener Informationen bereitgestellt werden. Sollte die Fehlererkennung realisieren, dass auch das visuelle Darstellen von Informationen gestört bzw. beeinträchtigt ist, kann die Funktionalität des Bildschirms weiter reduziert bzw. deaktiviert werden.

Auch wenn die Schritte hier mit den Buchstaben a. bis d. in einer spezifischen Reihenfolge angegeben sind, so ist es nicht erforderlich, diese Reihenfolge stets einzuhalten. Beispielsweise können die einzelnen Schritte unabhängig oft voneinander wiederholt und/oder im Falle der Wiederholung auch teilweise ausgelassen werden. Möglich ist, dass die Schritte zumindest teilweise zeitlich überlagert durchgeführt werden.

Der berührungssensible Bildschirm kann eine Vielzahl von Abschnitten aufweisen, wobei bei wiederholter Durchführung des Schrittes a. voneinander abweichende Abschnitte ausgewählt werden. Insbesondere ist ermöglicht, alle für den bidirektionalen Dialog erforderlichen Abschnitte des berührungssensiblen Bildschirms derart durchzuprüfen, wobei bevorzugt die Abschnitte nicht zeilen- und/oder spaltenweise ausgewählt werden. Insbesondere kann vorgesehen sein, dass eine Bewertung gemäß Schritt d. erst dann durchgeführt wird, wenn eine vorgegebene Vielzahl von Abschnitten gemäß Schritt c. sensorisch überprüft wurden. Es besteht die Möglichkeit, Schritt d. dann auszuführen, wenn ein einzelner der Vielzahl von Abschnitten ohne Berührung blieb, dies kann aber auch gegebenenfalls erst bei einer Mehrzahl von Abschnitten eingeleitet werden.

Der Abschnitt in Schritt a. kann pseudozufällig ausgewählt werden. Damit ist insbesondere gemeint, dass, soweit der Abschnitt von einer Recheneinheit vorgegeben wird, dieser keine Zufallszahlen in streng mathematischem Sinne generieren kann. Eine "pseudozufällige Auswahl" kann dann vorliegen, wenn die Auswahl nach statistischen Tests für Menschen zufällig aussehen. Es existieren Algorithmen für Computer bzw. Recheneinheiten, bei denen Zahlen so "durchmischt werden", dass sie für die Simulation im Computer geeignet sind. Beispielhaft sei hier auf die Methode zur Erzeugung von Pseudozufallszahlen per Computer anhand der sogenannten Kongruenzmethode von Lehmer (Kongruenzgenerator) verwiesen.

Ziel ist es, die Benutzung des berührungsempfindlichen Bildschirms bzw. dessen Reaktion anhand für den Bediener unerwarteten bzw. regelloser Auswahlen zu überwachen. Dies gewährleistet eine umfassende Überprüfung der Kommunikationsschnittstelle.

Es kann vorgesehen sein, dass die Schritte a. bis c. wiederholt werden, bevor Schritt d. ausgeführt wird. Bei der Wiederholung der Schritte a. bis c. kann vorgesehen sein, dass zunächst in Schritt a. mehrere Abschnitte vorausgewählt werden, die dann im Rahmen einer Wiederholung gemäß Schritten d. und c. angezeigt und überwacht werden. Wenn das Ergebnis aller ausgewählten Abschnitte vorliegt, kann Schritt d. ausgeführt werden.

Wenn ein Fahrzeug mindestens einen berührungsempfindlichen Bildschirm mit einer Recheneinheit hat, mittels dem mindestens eine Bedienungseinheit für das Fahrzeug steuerbar ist, kann zur Lösung der eingangs genannten Aufgaben kann auch ein Verfahren zum Betrieb eines Fahrzeugs beitragen, welches zumindest die folgenden Schritte umfasst:
a. Auswählen eines Abschnittes des berührungssensiblen Bildschirms durch die Recheneinheit;
b. Anzeigen eines Signals in dem ausgewählten Abschnitt zur Motivierung einer erwarteten Berührung;
c. Erfassen einer erwarteten Berührung in dem ausgewählten Abschnitt über eine vorgebbare Zeitspanne;
   wobei
d. die Steuerung der mindestens einen Bedienungseinheit für das Fahrzeug deaktiviert wird, wenn innerhalb der vorgegebenen Zeitspanne keine Berührung in dem ausgewählten Abschnitt erfasst wird.

Grundsätzlich ist möglich, die vorstehenden Erläuterungen zum Verfahren zur Bedienung des berührungsempfindlichen Bildschirms hier zur näheren Erläuterung ebenfalls heranzuziehen und umgekehrt. Dies gilt insbesondere für jeden der Schritte a. bis c..

Das Verfahren kann beispielsweise nach einer Aktivierung des Fahrzeugs einmalig bzw. erstmalig durchgeführt werden.

Gemäß Schritt d. erfolgt eine Deaktivierung der Steuerung der mindestens einen Bedienungseinheit für das Fahrzeug. Mit anderen Worten heißt das gegebenenfalls, dass die

Bedienungseinheit nur noch als Anzeigegerät fungiert, nicht aber mehr zum Empfang von Steuerbefehlen seitens des Fahrzeugbedieners eingerichtet ist. Dies kann dadurch erreicht werden, dass die Berührungsempfindlichkeit des Bildschirms deaktiviert wird. Weiter ist möglich, dass die Berührungsempfindlichkeit des Bildschirms aktiviert bleibt, entsprechende Berührungssignale aber nicht bzw. nur eingeschränkt zur weiteren Steuerung genutzt werden. Eine eingeschränkte Nutzung könnte dann beispielsweise ermöglicht bleiben, wenn diese durch andere Tasten, Eingabevorrichtungen und/oder Aktionen plausibilisiert werden.

Mit Schritt d. kann eine Information erzeugt werden, deren Befehl die Steuerung der mindestens einen Bedienungseinheit mittels einer alternativen Eingabevorrichtung beinhaltet. Die Bedienungseinheit wird insbesondere davon in Kenntnis gesetzt, dass die Bedienungseinheit für die Interaktion mit dem Fahrzeugbediener nicht mehr verfügbar ist und stattdessen die erwarteten Informationen bzw. Befehle von einer anderen, alternativen Eingabevorrichtung zu akzeptieren sind. Die alternativen Eingabevorrichtungen können beispielsweise eine Sprachsteuerung, ein Tastenfeld oder dergleichen sein.

Weiter wird eine Vorrichtung zum Betrieb eines Fahrzeugs vorgeschlagen, umfassend mindestens einen berührungsempfindlichen Bildschirm, der mit mindestens einer Bedienungseinheit für das Fahrzeug verbindbar ist. Die Bedienungseinheit ist eingerichtet, die mindestens eine Bedienungseinheit zu steuern, wobei mindestens eine Recheneinheit vorgesehen ist. Die Recheneinheit kann Teil des Fahrzeugs und/oder der Bedienungseinheit sein. Die mindestens eine Recheneinheit ist multifunktional und/oder eingerichtet zur Auswahl eines Abschnitts des berührungssensiblen Bildschirms (1. Funktion), zur Anzeige eines Signals in dem ausgewählten Abschnitt (2. Funktion) und zur Erfassung einer Berührung mit dem ausgewählten Abschnitt (3. Funktion). Die Recheneinheit kann mit einem Computer ausgeführt sein, in dem die Verfahrensschritte beispielsweise mit einer Software abgelegt sind. Die Recheneinheit ist insbesondere mit dem berührungsempfindlichen Bildschirm datenleitend in Verbindung. Weiter ist eine Deaktivierungseinrichtung vorgesehen, mit der die Berührungsempfindlichkeit des Bildschirms und/oder die mindestens eine Bedienungseinheit deaktivierbar ist. "Deaktivierbar" bedeutet in diesem Zusammenhang insbesondere, dass eine bidirektionale Kommunikation über den berührungsempfindlichen Bildschirm teilweise oder vollständig verhindert ist.

Bevorzugt ist die Vorrichtung eingerichtet, zumindest eines der hier vorgeschlagenen Verfahren zur Bedienung eines berührungsempfindlichen Bildschirms bzw. zum Betrieb eines Fahrzeugs durchzuführen. Die Vorrichtung kann in einem Fahrzeug integriert sein. Die Recheneinheit kann zumindest teilweise mit einer Fahrzeugsteuerung kombiniert werden.

Gemein sind den hier vorgestellten Konzepten, dass es sich um eine intrusive Diagnose zur Übertragungssicherheit zwischen dem Eingabegerät, hier also dem berührungsempfindlichen Bildschirm, und dem Bediener handelt. Da die Diagnose bzw. die einzelnen Aktionen, die mit der Diagnose verbunden sind, nicht einfach vom Bediener antizipiert werden können, können in Zukunft gegebenenfalls auch emissionsrelevante Funktionen über einen solchen berührungsempfindlichen Bildschirm gesteuert werden. Mit der Aktivierung des berührungsempfindlichen Bildschirms kann der Benutzer per visueller Botschaft aufgefordert werden, eine spezifische Eingabe vorzunehmen. Der für die erforderliche Eingabe zu berührende Bildschirmabschnitt variiert beispielsweise mit jeder Eingabeaufforderung. Auf diese Weise wird geprüft, ob die Mensch-Maschine-Interaktion ungehindert möglich ist. Wird die geforderte Eingabe durch den Bediener innerhalb einer definierten Zeitdauer nicht oder nicht korrekt vorgenommen, wird der berührungssensible Bildschirm für den aktiven Betriebszyklus lediglich zur Anzeige verwendet. Eingaben über die berührungssensitiven Oberflächen werden nicht ausgewertet.

Durch die aktive Einbeziehung des Bedieners ist ermöglicht, eine vollständige Überprüfung der Interaktionskette zwischen Mensch und Maschine zu realisieren. Darüber hinaus besteht für den Bediener eine direkte Rückkopplung durch die Erfassung seiner Eingabe und ein möglicher Systemfehler wird auch beim Bediener sofort erkennbar. Auf diese Weise ist es möglich, eine umfassende Eigendiagnose mit berührungsempfindlichen Bildschirmen zu realisieren.

Durch die Erkennung der fehlenden oder fehlerhaften Bedienbarkeit des berührungsempfindlichen Bildschirms kann als kausale Reaktion die Funktion des berührungsempfindlichen Bildschirms eingeschränkt bzw. vollständig deaktiviert werden. Aufgrund der vorangegangenen Interaktionskette wird dem Bediener sofort ersichtlich, dass ein Fehler vorliegt. Das Verfahren bzw. die Vorrichtung macht es möglich, die Diagnose des berührungsempfindlichen Bildschirms als sogenannte emissionsneutrale Ersatzreaktion (Emission Neutral Default Action) auszugestalten.

Damit ist insbesondere die Aufgabe gelöst, eine Übertragungssicherheit zwischen dem berührungsempfindlichen Bildschirm und dem Bediener herzustellen, so dass ausgeschlossen werden kann, dass ein Defekt zu einer ungewollten und gegebenenfalls emissionsbeeinflussenden Bedienung führt. Neben einer kaputten und/oder defekten Bildschirmoberfläche kommt die Problematik einer defekten Hintergrundbeleuchtung hinzu. Diese kann mit den hier vorgeschlagenen Verfahren und Vorrichtungen über eine Eigendiagnose erkannt werden. Durch die intrusive Diagnose (als eine Routine, die nur angestoßen wird, um eine Funktionsdiagnose durchzuführen) wird der Bediener so eingebunden, dass seine Handlungen voll erkennbar und damit die Bedienbarkeit zuverlässig bewertet werden kann.

Die Erfindung sowie das technische Umfeld werden nachfolgend anhand von Figuren erläutert. Es ist darauf hinzuweisen, dass die Figuren schematischer Natur sind. Weiter ist darauf hinzuweisen, dass die in den Figuren gezeigten Merkmale nicht zwingend in der dargestellten Kombination verwendet werden müssen, vielmehr sind Teilmerkmale extrahierbar und mit anderen Erläuterungen der Beschreibung und/oder anderen Figuren kombinierbar. Etwas anderes soll nur dann gelten, wenn dies hier explizit als eine zwingende Merkmalskombination ausgewiesen ist.

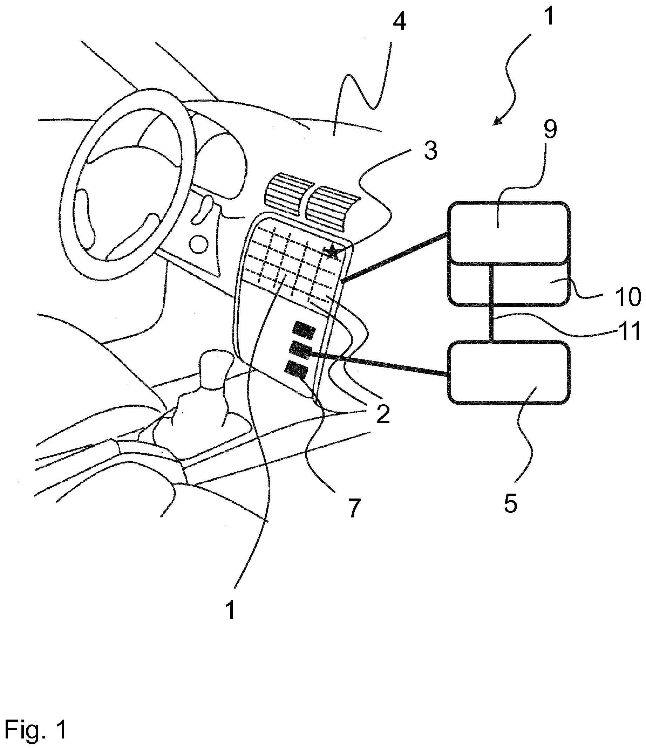

Fig. 1 zeigt teilweise und schematisch den Innenraum eines Fahrzeugs 4. Im Bereich der Mittelkonsole ist ein berührungsempfindlicher Bildschirm 1 zu erkennen, der eine Vielzahl von (imaginären) Abschnitten 2 aufweist. Der berührungsempfindliche Bildschirm 1 ist über eine Leitung 11 datenleitend mit einer Recheneinheit 9 verbunden. Der Recheneinheit 9 ist eine Deaktivierungseinrichtung 10 zugeordnet. Das Fahrzeug 4 weist weiterhin eine Bedienungseinheit 5 für das Fahrzeug auf, die mit der Recheneinheit 9 bzw. der Deaktivierungseinrichtung 10 datenleitend verbunden ist. Die Bedieneinheit 5 kann in den Betrieb des Fahrzeugs 4 eingreifen, beispielsweise durch Veränderung der Einstellung zur Klimatechnik, durch Veränderung des Motorbetriebs, durch Veränderung der Batterielade-/entladevorgänge, durch Veränderung des Emissionsverhaltens eines Abgassystems, etc.

Die hier skizzierte Vorrichtung 1 ist insbesondere so eingerichtet, dass diese erkennt, wenn der berührungsempfindliche Bildschirm 1 nicht voll funktionstüchtig ist. Hierfür kann an ausgewählten Abschnitten 2 des berührungsempfindlichen Bildschirms 1 ein Signal 3 angezeigt werden, das durch eine Berührung seitens des Bedieners auszuwählen ist. Wenn die Berührung nicht in einem erwarteten Zeitraum stattfindet bzw. nicht in dem erwarteten Abschnitt 2 erfolgt, kann die Deaktivierungseinrichtung 10 der Bedienungseinheit 5 mitteilen, dass nunmehr Steuerbefehle von einer alternativen Eingabevorrichtung 7, hier nach Art von Tasten dargestellt, zu akzeptieren sind.

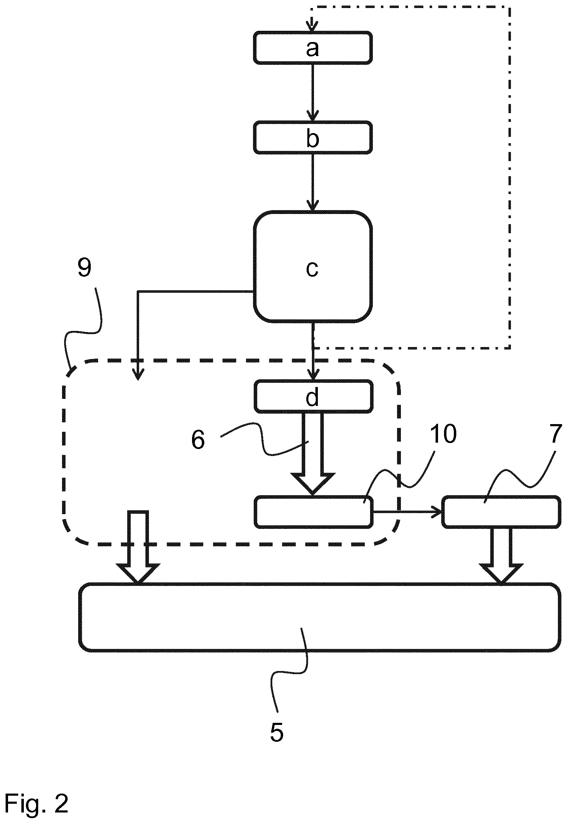

Fig. 2 zeigt schematisch einen möglichen Ablauf für ein Verfahren zur Bedienung eines berührungsempfindlichen Bildschirms bzw. eines Verfahrens zum Betrieb eines Fahrzeugs. Zentral sind die Verfahrensschritte a., b., c., d. gezeigt, die zeitlich nacheinander durchgeführt werden. Es ist angedeutet, dass die Schritte a., b., c. in Form einer Schleife wiederholt werden können, bevor eine Entscheidung hinsichtlich des Schrittes d. durchgeführt wird (siehe Strich-Punkt-Strich-Linie). Für den Fall, dass im Schritt d. eine Deaktivierung des Bildschirms bzw. der Steuerung der Bedieneinheit 5 vorgenommen werden soll, wird eine Information 6 erzeugt, die einen Befehl zur Steuerung der mindestens einen Bedienungseinheit 5 mittels der alternativen Eingabevorrichtung 7 umfasst. Erfolgt stattdessen eine erwartete Berührung in dem ausgewählten Abschnitt des berührungsempfindlichen Bildschirms, so wird gemäß des vorgeschlagenen Verfahrens die Bedienungseinheit (auch) über den berührungsempfindlichen Bildschirm ausgeführt.

### Bezugszeichenliste

- 1: Bildschirm
- 2: Abschnitt
- 3: Signal
- 4: Fahrzeug
- 5: Bedienungseinheit
- 6: Information
- 7: Eingabeeinrichtung
- 8: Vorrichtung
- 9: Recheneinheit
- 10: Deaktivierungseinrichtung
- 11: Leitung

## Patentansprüche

1. Verfahren zur Bedienung eines berührungsempfindlichen Bildschirms (1) mit einer Recheneinheit (9), umfassend zumindest die folgenden Schritte:
a. Auswählen eines Abschnittes (2) des berührungssensiblen Bildschirms (1) durch die Recheneinheit (9);
b. Anzeigen eines Signals (3) in dem ausgewählten Abschnitt (2) zur Motivierung einer erwarteten Berührung;
c. Erfassen einer erwarteten Berührung in dem ausgewählten Abschnitt (2) über eine vorgebbare Zeitspanne;
wobei
d. die Berührungsempfindlichkeit des Bildschirms (1) deaktiviert wird, wenn innerhalb der vorgegebenen Zeitspanne keine Berührung in dem ausgewählten Abschnitt (2) erfasst wird.

2. Verfahren nach Patentanspruch 1, bei dem der berührungssensiblen Bildschirm (1) eine Vielzahl von Abschnitten (2) aufweist, und bei wiederholter Durchführung des Schritts a. voneinander abweichende Abschnitte (2) ausgewählt werden.

3. Verfahren nach Patentanspruch 2, bei dem der Abschnitt (2) in Schritt a. pseudozufällig ausgewählt wird.

4. Verfahren nach einem der vorherigen Patentansprüche, wobei die Schritte a. bis c. wiederholt werden, bevor Schritt d. ausgeführt wird.

5. Verfahren zum Betrieb eines Fahrzeugs (1), wobei das Fahrzeug (4) mindestens einen berührungsempfindlichen Bildschirm (1) mit einer Recheneinheit (9) hat, mittels dem mindestens eine Bedienungseinheit (5) für das Fahrzeug (4) steuerbar ist und das Verfahren zumindest die folgenden Schritte:
a. Auswählen eines Abschnittes (2) des berührungssensiblen Bildschirms (1) durch die Recheneinheit (9);
b. Anzeigen eines Signals (3) in dem ausgewählten Abschnitt (2) zur Motivierung einer erwarteten Berührung;
c. Erfassen einer erwarteten Berührung in dem ausgewählten Abschnitt (2) über eine vorgebbare Zeitspanne;
wobei
d. die Steuerung der mindestens einen Bedienungseinheit (5) für das Fahrzeug (4) deaktiviert wird, wenn innerhalb der vorgegebenen Zeitspanne keine Berührung in dem ausgewählten Abschnitt (2) erfasst wird.

6. Verfahren nach Patentanspruch 5, bei dem mit Schritt d. eine Information (6) erzeugt wird, die einen Befehl zur Steuerung der mindestens einen Bedienungseinheit (5) mittels einer alternativen Eingabeeinrichtung (7) umfasst.

7. Vorrichtung (8) zum Betrieb eines Fahrzeugs (4), umfassend mindestens einen berührungsempfindlichen Bildschirm (1), der mit mindestens einer Bedienungseinheit (5) für das Fahrzeug (4) verbindbar und eingerichtet ist, die mindestens eine Bedienungseinheit (5) zu steuern, wobei mindestens eine Recheneinheit (9) eingerichtet zur Auswahl eines Abschnittes (2) des berührungssensiblen Bildschirms (1), zur Anzeige eines Signals (3) in dem ausgewählten Abschnitt (2) und zur Erfassung einer Berührung in dem ausgewählten Abschnitt (2) sowie weiter eine Deaktivierungseinrichtung (10) zumindest für die Berührungsempfindlichkeit des Bildschirms (1) oder die mindestens eine Bedienungseinheit (5) vorgesehen ist, **dadurch gekennzeichnet, dass** die Vorrichtung (8) eingerichtet ist zur Durchführung eines Verfahrens nach einem der Patentansprüche 1 bis 6.

## Claims

1. A method for operating a touch-sensitive screen (1) with a computing unit (9), comprising at least the following steps:
a. selecting a section (2) of the touch-sensitive screen (1) by the computing unit (9);
b. displaying a signal (3) in the selected section (2) to provide motivation of an expected contact;
c. detecting an expected touch in the selected section (2) over a predetermined period;
wherein
d. the touch sensitivity of the screen (1) is deactivated if a touch is not detected in the selected section (2) within the predetermined period.

2. The method according to claim 1, wherein the touch-sensitive screen (1) has a plurality of sections (2), and sections (2) that differ from one another are selected when step a. is repeated.

3. The method according to claim 2, wherein the section (2) in step a. is selected pseudorandomly.

4. The method according to one of the preceding claims, wherein steps a. to c. are repeated before step d. is carried out.

5. A method for operating a vehicle (1), wherein the vehicle (4) has at least one touch-sensitive screen (1) with a computing unit (9) by means of which at least one control unit (5) for the vehicle (4) can be controlled, and the method is at least the following steps:
a. selecting a section (2) of the touch-sensitive screen (1) by the computing unit (9);
b. displaying a signal (3) in the selected section (2) to provide motivation of an expected contact;
c. detecting an expected touch in the selected section (2) over a predetermined period;
wherein
d. the control of the at least one control unit (5) for the vehicle (4) is deactivated if no touch in the selected portion (2) within the predetermined period is detected.

6. The method according to claim 5, wherein in step d., information (6) is generated that comprises a command for controlling the at least one control unit (5) by means of an alternative input device (7).

7. A device (8) for operating a vehicle (4), comprising at least one touch-sensitive screen (1) that can be connected to at least one operating unit (5) for the vehicle (4) and is configured to control the at least one control unit (5), wherein at least one computing unit (9) is configured for selecting a section (2) of the touch-sensitive screen (1), for displaying a signal (3) in the selected section (2), and for detecting a touch in the selected section (2), and furthermore a deactivation device (10) is provided at least for the touch sensitivity of the screen (1) or the at least one control unit (5), **characterized in that** the device (8) is configured to carry out a method according to one of claims 1 to 6.

## Revendications

1. Procédé d'utilisation d'un écran tactile (1) doté d'une unité de calcul (9), comprenant au moins les étapes suivantes :
a. sélection d'une partie (2) de l'écran tactile (1) par l'unité de calcul (9) ;
b. affichage d'un signal (3) dans la partie (2) sélectionnée pour motiver un contact attendu ;
c. détection d'un contact attendu dans la partie (2) sélectionnée pendant une période pouvant être prédéfinie ;
dans lequel
d. la sensibilité au toucher de l'écran (1) est désactivée quand aucun contact n'est détecté dans la partie (2) sélectionnée pendant la période prédéfinie.

2. Procédé selon la revendication 1, dans lequel l'écran tactile (1) comporte une pluralité de parties (2) et des parties (2) différentes les unes des autres sont sélectionnées lors de l'exécution répétée de l'étape a.

3. Procédé selon la revendication 2, dans lequel la partie (2) est sélectionnée dans l'étape a. de manière pseudo-aléatoire.

4. Procédé selon l'une quelconque des revendications précédentes, dans lequel les étapes a. à c. sont répétées avant que l'étape d. ne soit exécutée.

5. Procédé permettant de faire fonctionner un véhicule (1), le véhicule (4) ayant au moins un écran tactile (1) doté d'une unité de calcul (9), au moyen duquel au moins une unité de commande (5) pour le véhicule (4) peut être commandée et le procédé ayant au moins les étapes suivantes :
a. sélection d'une partie (2) de l'écran tactile (1) par l'unité de calcul (9) ;
b. affichage d'un signal (3) dans la partie (2) sélectionnée pour motiver un contact attendu ;
c. détection d'un contact attendu dans la partie (2) sélectionnée pendant une période pouvant être prédéfinie ;
dans lequel
d. la commande de l'au moins une unité de commande (5) pour le véhicule (4) est désactivée quand aucun contact n'est détecté dans la partie (2) sélectionnée pendant la période prédéfinie.

6. Procédé selon la revendication 5, dans lequel, avec l'étape d., une information (6) est générée, qui comprend une instruction pour la commande de l'au moins une unité de commande (5) au moyen d'un autre dispositif de saisie (7).

7. Dispositif (8) permettant de faire fonctionner un véhicule (4), comprenant au moins un écran tactile (1), qui peut être relié à au moins une unité de commande (5) pour le véhicule (4) et qui est configuré pour commander l'au moins une unité de commande (5), dans lequel au moins une unité de calcul (9) configurée pour la sélection d'une partie (2) de l'écran tactile (1), pour l'affichage d'un signal (3) dans la partie (2) sélectionnée et pour la détection d'un contact dans la partie (2) sélectionnée ainsi qu'en outre un dispositif de désactivation (10) au moins pour la sensibilité au toucher de l'écran (1) ou l'au moins une unité de commande (5) sont prévus, **caractérisé en ce que** le dispositif (8) est configuré pour exécuter un procédé selon l'une des revendications 1 à 6.
